# EUROPEAN PATENT APPLICATION

(11) **EP 1 977 890 A1**
(43) Date of publication of application: **08.10.2008**
(21) Application number: 07381028.5
(22) Date of filing: 03.04.2007
(51) Int. Cl.: B32B 37/12, B32B 38/00, B32B 37/18, B32B 15/06

(54) **Rubber reinforced by continuous metal plate and its manufacturing process**

(71) Applicant: Lloveras Calvo, Juan, Barcelona (ES)
(72) Inventor: Lloveras Calvo, Juan, Barcelona (ES)
(74) Representative: Esteban Perez-Serrano, Maria Isabel

(57) **Abstract**

Rubber reinforced continuously by a metal sheet (2) and which comprises a rubber sheet (1) adhering to a metal sheet where both sheets are appropriately treated in order to ensure their adherence, resulting in a laminar combination which combines the properties of both materials so that the final combination has a structural rigidity, deformability in a continuous and uniform manner which does not aesthetically damage the metal sheet, absorbs vibrations, providing electrical insulation, chemical stability, recoverability and lightness.

## Description

### OBJECT OF THE INVENTION

The object of the present invention is a rubber material continuously reinforced by a metal plate, that is, it refers to an arrangement of rubber together with metal plate and the manufacturing procedure thereof.

The present invention is characterised by its special characteristics which show a combination of the laminar combination formed by a sheet of rubber adhering to a metal plate thus obtaining a material which is able, through additional means, to demonstrate the properties of each of its separate materials.

The purpose of the present invention is also to describe the successive manufacturing stages required for the joint arrangement of a sheet of rubber adhering to a sheet of metal, a procedure characterised by the nature of the stages, their combination and the fact that the manufacturing procedure takes place in a continuous manner. Therefore the object of the present invention is circumscribed by the scope of laminar combinations and more specifically between those which have at least one rubber sheet.

### BACKGROUND TO THE INVENTION

To date some laminates are known such as the ALCUBOND® composition sheet comprising two sheets of Aluminium Al Mg 1 and a central polyethylene nucleus. This panel is characterised by its considerable flatness, the possibility of large dimensions (up to 8000 mm in length by 1500 mm in width.) and its capacity for adaptation to various forms and parts, due to the possibility of milling ALCUBOND® on its back side and milling to a depth equal to the thickness of the polyethylene.

However, the aforementioned combination does have some disadvantages. On one hand polyethylene is a rigid plastic material, it cannot be bent or broken, at ordinary temperatures it is firm and flexible and is a recoverable material and therefore when joined to a metal sheet it is not easy to obtain an easily moulded combination which can be configured in such a way that it may be curved with small curvature radii, without striated marks or scoring being made on the metal sheet.

In addition, the polyethylene is barely resistant to chemical products.

Therefore the object of this invention is to overcome previous disadvantages by developing a laminated combination formed by rubber reinforced by a metal sheet as described in this application.

Notwithstanding this fact, although the combination of rubber with a metal sheet may seem obvious, it is not without complications and difficulties in terms of adherence, a fact which is resolved with the manufacturing stages of this procedure.

### DESCRIPTION OF THE INVENTION

The object of the invention is rubber reinforced by a metal sheet both being joined continuously by sizing or adhesives.

Rubber is a polymer with several chained units of elastic hydrocarbon, the isoprene C5H8, which emerges in the form of a milky emulsion (known as latex) in the sap of various plants. However the rubber employed in the present invention need not only be natural rubber, it may also be synthetic rubber.

Rubber is subjected to a process known as vulcanisation, which results in the removal of its undesirable properties. In this way, rubber becomes imperishable, resistant to solvents and to temperature variations, thus acquiring excellent mechanical properties.

Rubber is mouldable and elastic, which, when combined with a resistant and structurally rigid metal sheet, results in a combination which possesses the properties arising from combining those of both elements.
The thickness of the metal sheets used may vary between 0.1mm and 1.5 mm whereas the thickness of the adhesive rubber sheet varies between 1mm to 3 or 4 mm.

Thus the combination obtained from the arrangement of a rubber sheet adhering to a metal sheet is provided with the following characteristics:
- On one hand structural rigidity, a property provided by the metal sheet. The final rigidity of the combination shall depend on the thickness of the metal sheet used.
- On the other hand it has deformability resulting from combining rubber with the metal sheet, as the deformations which the metal sheet might suffer are absorbed by the rubber sheet which is highly elastic.
- There is also a possibility of recovering the initial geometry without it damaging or marking the combination, resulting from combining the rubber and the metal sheet, as the rubber adhering to the metal sheet absorbs the tensions to which the metal could be subjected, avoiding the formation of striation or scoring.
- Thermal insulation due to the nature of rubber.
- Acoustic insulation provided mainly by the rubber sheet. Depending on the level of acoustic insulation required, the thickness of the rubber sheet is increased.
- The combination is extremely resistant to chemical attacks, a characteristic provided by the rubber sheet and therefore, in a tubular configuration the combination is particularly useful in chemical industrial installations.
Any type of metal may be used for the metal sheet including copper, aluminium, galvanised steel, non-galvanised steel etc.

### EXPLANATION OF THE DRAWINGS

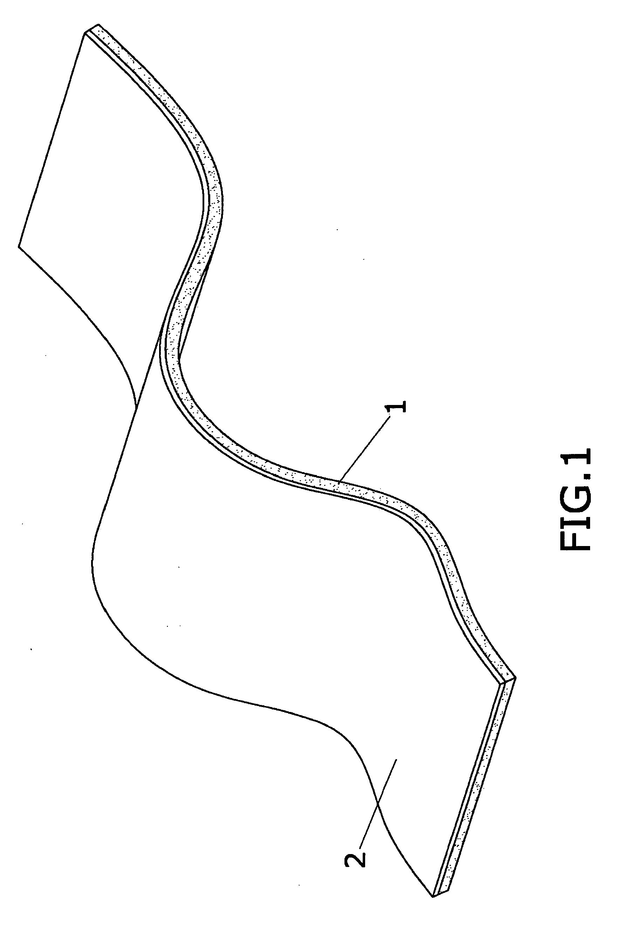

In order to complete the description which is to follow and to assist in a better understanding of the characteristics of the invention, a set of plans is attached to the present descriptive report, which are illustrative but in no way restrictive, and which represent the most significant details of the invention. Figure 1 shows a representation of a sheet of rubber adhering to a metal sheet which has been given a specific form.

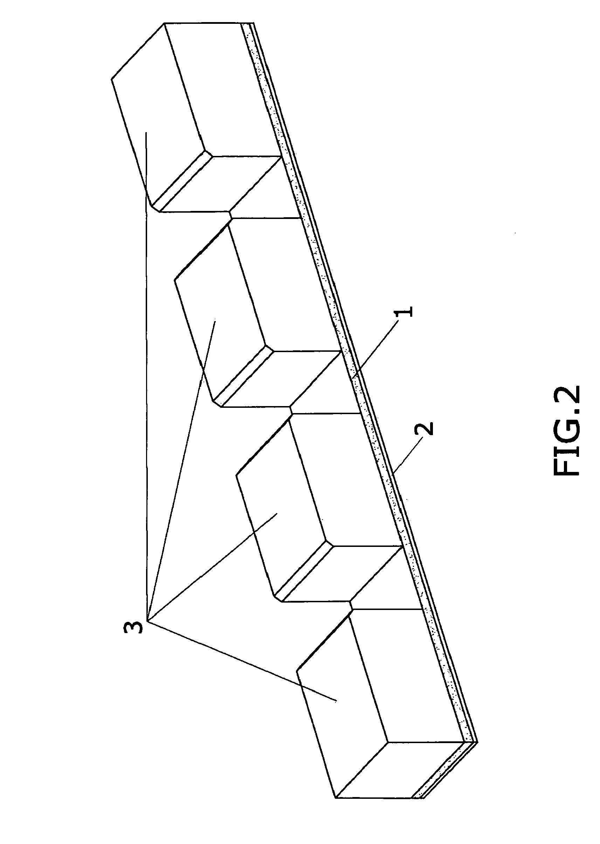

Figure 2 shows a perspective representation of a laminar combination comprising a sheet of rubber reinforced by a metal sheet all of which is supported on a wooden base.
Figure 3 shows the aforementioned combination which has been give a specific form in this case quadrangular.

### PREFERRED EMBODIMENT OF THE INVENTION

In the light of the drawings below a preferred embodiment of the proposed invention is described.
In figure 1 we note the combination formed by a sheet of rubber (1) adhering to a metal sheet (2) throughout its surface, and which has been formed by adopting a specific form.
The possibility of forming the aforementioned combination is feasible due to the properties of each of the sheets which, once they have adhered, do not lose their intrinsic properties of elasticity, structural rigidity and thus the combination offers both the possibility of being deformed and subsequently recovered without making any marks on the metal surface.

It is also possible to additionally provide the metal face (2) with a sheet of PVC or similar for aesthetic purposes.

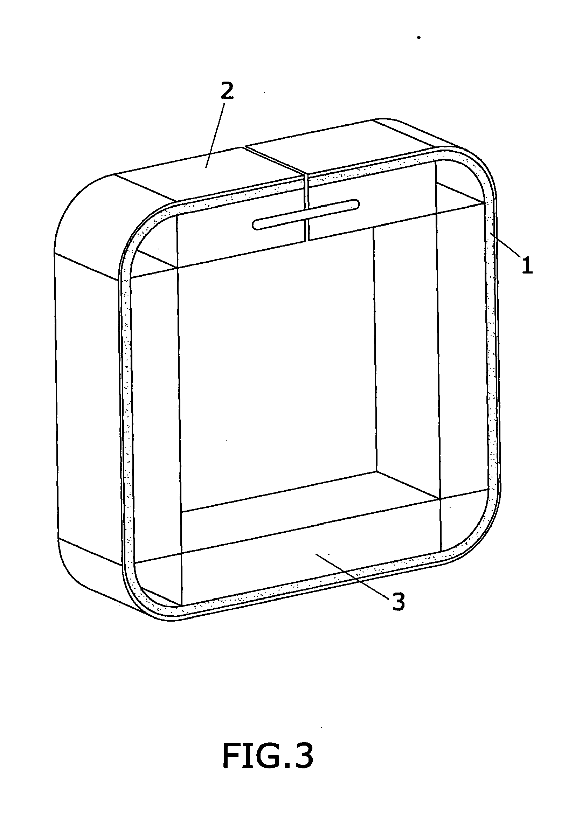

Figure shows a combination as previously described which, in order to provide it with further structural support, adheres to a wooden base (3). The pieces of rubber show a specific arrangement and configuration with the aim of enabling subsequent conformation of an object such as that shown in figure 3 which is able to obtain a closed surface presenting a total continuity of its surface without any discontinuities or lack of uniformity.

The aforementioned combination described formed by a sheet of rubber continuously reinforced by a metal sheet obtained as the result of applying a series of stages, which include the following:
- Scraping of the metal to a depth of 60 to 120 micras, carried out in a one way direction and longitudinally, thus apart from cleaning the surface on which the rubber is to adhere of any grease, oil or dirt, it is possible to provide one of the faces of the metal sheet with a rough surface.
- Application of a "primer", paint which fixes to the metal and which protects it from any possible oxidation preparing the surface for the subsequent application of an adhesive.
   Furnace drying of the "primer" at a temperature between 60-180°C
- Application of adhesive sizing, which may vary from reactive polyurethane to polyurethanes with two components. The adhesive is applied as follows:
   o With a roller.
   o By spraying.
   o With a gun providing spiral threads or rows. Surface treatment of the rubber sheet on the face to be adhered to. This treatment may be:
   o Corona discharge
   o Flame treatment.

Corona discharge consists of a high voltage and frequency generator which feeds a suspended metal roller which is grounded or earthed. The roller is covered with an insulation such as polyester, ceramic or silicone elastomer. The corona is formed when a high voltage is applied causing ionisation of the air and forming a plasma which is known as corona discharge.

The flame treatment is based on a burner and a portable tank. The important parameters in a surface treatment procedure through flame treatment are the air/gas ratio and the nature of said gas, the distance between the flame and the surface and the treatment time.
- Finally the procedure concludes with the direct sizing of the rubber sheet to the metal sheet applying a pressure of 2 to 3 kg/cm 2 depending on the type of size used.

In those cases in where a harder material is required, the laminar combination is supported on a wooden base to give it more consistency. The wooden base may consist of a plywood panel, or chipboard , MDF or phenol compact.

The sizing of the wooden base to the adhering rubber and metal combination is carried out as follows:
o Scraping of the wooden base
o Application of a primer paint
o Furnace drying at a temperature between 60 and 120 degrees C
o Application of a sizing
o Treatment of the rubber surface to which it will adhere by means of corona discharge or flame treatment.
o Direct sizing applying a certain amount of pressure.

As a result of the final combination comprising a sheet of rubber adhering to a sheet of metal, a combination is achieved which may be easily deformed and thus achieving curvature radii which are equal to the thickness of the rubber sheet. Thus, if the rubber has a thickness of 1.5 mm it will be possible to obtain a curvature radius of 1.5mm/

The curve of the laminar combination obtained is made by cold moulding using rolls presses etc.
The final laminar combination obtained may be given the aesthetic aspect desired, for example, by means of coverage using a "wood look" PVC sheet.

Therefore, by combining a material such as rubber with another such as a metal sheet, a laminar combination is obtained with ideal construction properties as it has:
o Structural rigidity
o Deformability or facility for moulding
o Recoverability
o Lightness
o Acoustic insulation
o Thermal insulation
o Resistance to chemical attack
As the rubber adheres to the metal sheet, it receives from the metal sheet a structure which in itself it does not possess, in addition to a structural stability and rigidity, whereas from the rubber the metal obtains the possibility of being curved in a continuous and uniform manner without suffering any striations or scores on its surface, due to the elasticity of the rubber and due to the fact that as it adheres to the metal sheet it ensures that the sheet when bent does not suffer any scoring or striation, since the rubber absorbs the tensions and encourages the structural union of the metal sheet.

That is, the final laminar combination obtained possesses the properties of both materials without, as a consequence of their adherence, either material losing any of their structural properties.
The final combination is so pliable in its conformation and deformability that it may be wound and unwound which facilitates its treatment and manageability.

In addition, due to the properties of the rubber, it is possible to obtain channels whose interior face is rubber and therefore they act as conduits or ducts which provide insulation from an electrical point of view as well as providing acoustic insulation.
Another possibility of the laminar combination which is the subject of this invention is pressing or drawing, so that a press can be applied to the metal sheet without breaking it as the rubber plate, being elastic, is able to stretch.
The essential nature of this invention is not altered by materials, form, size and arrangement of the component elements which are described in a way which is not restrictive but which is sufficient for its reproduction by an expert.

## Claims

1. Rubber continuously reinforced by a metal sheet **characterised in that** it consists of a rubber sheet which adheres to a metal sheet using primer paint and a sizing or adhesive.

2. Rubber continuously reinforced by a metal sheet according to claim one **characterised in that** the metal sheet is of a thickness varying between 1mm and 1.5 mm

3. Rubber continuously reinforced by a metal sheet according to claim one **characterised in that** the rubber sheet is of a thickness varying between 1 mm and various mm.

4. Rubber continuously reinforced by a metal sheet according to any of the previous claims **characterised in that** a sheet of PVC or similar adheres to the metal sheet for aesthetic purposes.

5. Rubber continuously reinforced by a metal sheet according to any of the previous claims **characterised in that** the laminar combination of rubber and metal is supported on a wooden base to provide it with more consistency where the wooden base may be a plywood panel, a chipboard panel, MDF or phenol compact and similar.

6. Procedure for manufacturing rubber reinforced continuously by a metal sheet as claimed previously **characterised in that** it consists of the following stages:
- Metal scraping,
- Application of primer, a paint which fixes onto metal, and prevents any oxidation preparing a surface for the subsequent application of an adhesive.
- Furnace drying of the primer paint at a temperature between 60-180°C
- Surface treatment of the rubber sheet on the face which is to adhere to the metal.
- Finally the process concludes with direct sizing of the rubber sheet applying pressure of 2 to 3 kg/cm2 depending on the size or sizing employed.

7. Procedure according to claim 6 **characterised in that** the scraping is made at a depth of 60 to 120 micras, and carried out n a one-way longitudinal direction.

8. Procedure according to claim 6 **characterised in that** the adhesive is applied :
o With a roller
o By means of a sprayer.
o By means of a gun spraying spiral threads or rows.

9. Procedure according to claim 6, **characterised in that** the surface treatment of the rubber sheet on the face to which the other sheet will adhere is:
- A corona discharge treatment or
- A Flame treatment

10. Procedure according to any of claims 6 to 9, **characterised in that** in those cases where the material requires greater hardness the laminar combination is situated on a wooden base or Phenol Compact in order to provide greater consistency following the same previous steps:
- Scraping of the wooden base or Phenol Compact
- Application of a "primer"
- Furnace drying at a temperature between 60° and 120°C.
- Application of a size or sizing
- Treatment of the rubber surface which is to adhere with either corona or flame treatment.
- Direct sizing applying a certain amount of pressure.

11. Procedure according to claim 10 **characterised in that** the wooden or phenol compact base may be a plywood panel, a chipboard panel, MDF or phenol compact or similar.

12. Use of rubber reinforced continuously as previously claimed **characterised in that** it may be used as a material to aesthetically adorn surfaces, facings etc.

13. Use of rubber reinforced continuously by a metal sheet as previously claimed **characterised in that** it is used to form conduits and ducts.

## Amended claims

### Amended claims in accordance with Rule 137(2) EPC.

**1.** Rubber continuously reinforced by a metal sheet **characterised in that** it consists of a rubber sheet which adheres to a metal sheet provided with a scraping on the face to be adhered to the rubber, a primer paint and a sizing or adhesive.

**2.** Rubber continuously reinforced by a metal sheet according to claim one **characterised in that** the metal sheet is of a thickness varying between 1mm and 1.5 mm

**3.** Rubber continuously reinforced by a metal sheet according to claim one **characterised in that** the rubber sheet is of a thickness varying between 1 mm and various mm.

**4.** Rubber continuously reinforced by a metal sheet according to any of the previous claims **characterised in that** a sheet of PVC or similar adheres to the metal sheet for aesthetic purposes.

**5.** Rubber continuously reinforced by a metal sheet according to any of the previous claims **characterised in that** the laminar combination of rubber and metal is supported on a wooden base to provide it with more consistency where the wooden base may be a plywood panel, a chipboard panel, MDF or phenol compact and similar.

**6.** Procedure for manufacturing rubber reinforced continuously by a metal sheet as claimed previously **characterised in that** it consists of the following stages:
- Metal scraping,
- Application of primer, a paint which fixes onto metal, and prevents any oxidation preparing a surface for the subsequent application of an adhesive.
- Furnace drying of the primer paint at a temperature between 60-180°C
- Surface treatment of the rubber sheet on the face which is to adhere to the metal.
- Finally the process concludes with direct sizing of the rubber sheet applying pressure of 2 to 3 kg/cm2 depending on the size or sizing employed.

**7.** Procedure according to claim 6 **characterised in that** the scraping is made at a depth of 60 to 120 micras, and carried out n a one-way longitudinal direction.

**8.** Procedure according to claim 6 **characterised in that** the adhesive is applies
o With a roller
o By means of a sprayer.
o By means of a gun spraying spiral threads or rows.

**9.** Procedure according to claim 6, **characterised in that** the surface treatment of the rubber sheet on the face to which the other sheet will adhere is:
- A corona discharge treatment or
- A Flame treatment

**10.** Procedure according to any of claims 6 to 9, **characterised in that** in those cases where the material requires greater hardness the laminar combination is situated on a wooden base or Phenol Compact in order to provide greater consistency following the same previous steps:
- Scraping of the wooden base or Phenol Compact
- Application of a "primer"
- Furnace drying at a temperature between 60° and 120°C.
- Application of a size or sizing
- Treatment of the rubber surface which is to adhere with either corona or flame treatment.
- Direct sizing applying a certain amount of pressure.

**11.** Procedure according to claim 10 **characterised in that** the wooden or phenol compact base may be a plywood panel, a chipboard panel, MDF or phenol compact or similar.

**12.** Use of rubber reinforced continuously as previously claimed **characterised in that** it may be used as a material to aesthetically adorn surfaces, facings etc.

**13.** Use of rubber reinforced continuously by a metal sheet as previously claimed **characterised in that** it is used to form conduits and ducts.
